# EUROPEAN PATENT APPLICATION

(11) **EP 4 438 204 A1**
(43) Date of publication of application: **02.10.2024**
(21) Application number: 24160409.9
(22) Date of filing: 29.02.2024
(51) Int. Cl.: B22F 10/14, B22F 12/30, B22F 12/82, B29C 64/165, B29C 64/245, B33Y 40/20, F26B 3/04, F26B 9/06, F26B 21/00

(54) **DRYING DEVICE, DRYING METHOD, AND MODELING SYSTEM**

(30) Priority: 10.03.2023 JP 2023037589
(71) Applicant: Ricoh Company, Ltd., Tokyo 143-8555 (JP)
(72) Inventor: HASHIMOTO, Kenichiroh, Tokyo, 143-8555 (JP); SUGIURA, Kenji, Tokyo, 143-8555 (JP); MUTOH, Toshiyuki, Tokyo, 143-8555 (JP)
(74) Representative: SSM Sandmair

(57) **Abstract**

A drying device (200) includes a housing section (41) and a drying section (40). The housing section (41) is configured to house a powder bound object (50). The drying section (41) is configured to dry the powder bound object (50) housed in the housing section (41). The housing section (41) includes an air vent (609 in a bottom (48) except an end.

## Description

### BACKGROUND OF THE INVENTION

### 1. Field of the Invention

The present invention relates to a drying device, a drying method, and a modeling system.

### 2. Description of the Related Art

As a method of modeling a modeled object, for example, a method using the powder lamination modeling system (binder jetting system) is known.

In this method, a solvent and the like contained in the resulting modeled object need to be dried.

For example, Japanese Unexamined Patent Application Publication No. 2016-68334 proposes a configuration in which a modeled object (modeled layer) on a modeling stage is dried by sending air from a fan, as a drying device drying the modeled object, onto the modeling stage. To be specific, holes are disposed in ends of the modeling stage, and sponges that do not allow powder to pass therethrough and that allow air to pass therethrough are disposed at these holes. Unfortunately, the drying device in Japanese Unexamined Patent Application Publication No. 2016-68334 cannot reduce energy consumption caused by drying.

Thus, an object of the present invention is to reduce energy consumption caused by drying.

### SUMMARY OF THE INVENTION

According to an aspect of the present invention, a drying device includes a housing section and a drying section. The housing section is configured to house a powder bound object. The drying section is configured to dry the powder bound object housed in the housing section. The housing section includes an air vent in a bottom except an end.

According to an aspect of the present invention, energy consumption caused by drying can be reduced.

### BRIEF DESCRIPTION OF THE DRAWINGS

FIG. 1 is a schematic view of a modeling system equipped with a drying device according to a first embodiment of the present invention;
FIG. 2 is a diagram illustrating an example modeling device;
FIG. 3 is a block diagram illustrating an example controlling section of the modeling device;
FIG. 4 is a diagram illustrating a modeling operation;
FIG. 5 is a diagram illustrating the modeling operation;
FIG. 6 is a diagram illustrating the modeling operation;
FIG. 7 is a diagram illustrating the modeling operation;
FIG. 8 is a diagram illustrating the modeling operation;
FIG. 9 is a diagram illustrating the modeling operation;
FIG. 10 is a diagram illustrating an overall configuration of the drying device according to the first embodiment of the present invention;
FIGS. 11A and 11B are plan views of a housing section, viewed from above, according to the first embodiment of the present invention;
FIG. 12 is a graph illustrating results of tests conducted to check the speed of drying processing in a configuration according to the first embodiment of the present invention and in a comparative example differing therefrom;
FIG. 13 is a plan view of a housing section according to a second embodiment of the present invention;
FIG. 14 is a plan view of a housing section according to a third embodiment of the present invention;
FIG. 15 is a plan view of a housing section according to a fourth embodiment of the present invention;
FIG. 16 is a sectional view of a housing section according to a fifth embodiment of the present invention;
FIG. 17 is a plan view of the housing section according to the fifth embodiment of the present invention;
FIG. 18 is a sectional view of a housing section according to a sixth embodiment of the present invention;
FIG. 19 is a sectional view of a housing section according to a seventh embodiment of the present invention;
FIG. 20 is a sectional view of a housing section according to an eighth embodiment of the present invention;
FIG. 21 is a plan view of a housing section according to a ninth embodiment of the present invention;
FIG. 22 is a sectional view of a housing section according to a tenth embodiment of the present invention;
FIG. 23 is a sectional view of a housing section according to an eleventh embodiment of the present invention;
FIG. 24 is a sectional view of a housing section according to a twelfth embodiment of the present invention;
FIG. 25 is a sectional view of a housing section according to a thirteenth embodiment of the present invention;
FIG. 26 is a sectional view of a housing section according to a fourteenth embodiment of the present invention;
FIG. 27 is a sectional view of a housing section according to a fifteenth embodiment of the present invention; and
FIG. 28 is a diagram illustrating another example modeling device.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

Embodiments of a drying device according to the present invention will be described below with reference to the drawings. Note that, in each of the drawings for describing the present invention, constituents such as members and components having the same functions or shapes are denoted by the same reference signs as long as their distinctions are possible, and once provided, their description will be omitted.

### Configuration of Modeling System

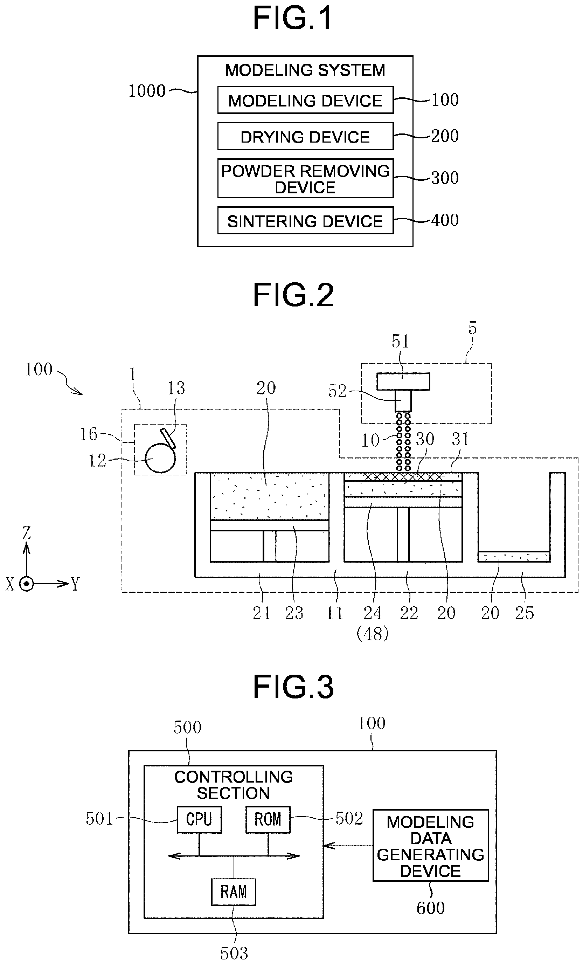

FIG. 1 is a schematic view of a modeling system equipped with a drying device according to a first embodiment of the present invention.

As illustrated in FIG. 1, the modeling system 1000 includes a modeling device 100, the drying device 200, a powder removing device 300, and a sintering device 400.

The modeling device 100 is a modeling device that uses powder (dust) to perform modeling processing. As the powder, in addition to aluminum and other metals, ceramics, glass, and the like can be used. The modeling device 100 repeats a process of forming a powder layer containing the powder and a process of applying modeling liquid to the powder layer to model a modeled object composed of a plurality of modeled layers in which the powder is bound.

The drying device 200 performs drying processing to the modeled object modeled by the modeling device 100. The drying processing vaporizes and removes a liquid component, such as a solvent remaining in the modeled object.

The powder removing device 300 removes excess powder attached to the modeled object after the drying processing. Methods of removing the excess powder include a method of removing the excess powder from the modeled object by air blow, a method of removing the excess powder by immersing the modeled object into a removing liquid, and the like.

The sintering device 400 heats the modeled object after the excess powder removing processing to remove a resin component contained in the modeled object and to sinter the powder. This unifies the powder forming the modeled object, thereby acquiring a sintered body. Note that the resin removing processing and the sintering processing may be performed consecutively using the same device or may be performed by different devices.

In addition to the above-described devices, the modeling system 1000 may also include a post-processing device and the like. The post-processing device is not particularly limited and can be selected as appropriate for the purpose. Examples of the post-processing device include a surface protecting processing device that performs surface protecting processing to the modeled object after the excess powder removing processing, a coating device that coats the modeled object after the excess powder removing processing, and the like.

### Configuration of Modeling Device

Next, an example of the modeling device 100 will be described with reference to FIG. 2.

FIG. 2 illustrates an example of the modeling device 100. As an example, the illustrated modeling device 100 uses the powder lamination system (binder jetting system). This modeling device 100 includes a modeling section 1 and a modeling liquid applying section 5. The modeling section 1 forms a powder layer 31 containing powder 20. The modeling liquid applying section 5 applies the modeling liquid 10 to the powder layer 31 to form a modeled layer 30 in which the powder 20 is bound.

The modeling section 1 includes a powder tank 11 and a stacking unit 16. The powder tank 11 includes a feed tank 21, a modeling tank 22, and an excess powder tank 25. The feed tank 21, the modeling tank 22, and the excess powder tank 25 are each formed to have a box shape with a top surface open.

The feed tank 21 is a tank housing the powder 20 to be fed to the modeling tank 22. A bottom of the feed tank 21 is configured as a feed stage 23 capable of moving up and down in a vertical direction (Z direction in FIG. 2).

The modeling tank 22 is a tank where the powder layer 31 and the modeled layer 30 in which the modeling liquid 10 is applied to the powder layer 31 are formed. A bottom 48 of the modeling tank 22 is configured as a modeling stage 24 capable of moving up and down in the vertical direction (Z direction in FIG. 2).

The excess powder tank 25 is a tank housing excess powder 20 overflowing from the modeling tank 22 among the powder 20 fed to the modeling tank 22.

The stacking unit 16 includes a leveling section 12 and a powder removing section 13.

The leveling section 12 is means that reciprocates in a horizontal direction (Y direction in FIG. 2) to perform leveling while feeding the powder 20 from the feed tank 21 to the modeling tank 22, thereby forming the powder layer 31. In the example illustrated in FIG. 2, a rotary body called a recoater is used as the leveling section 12. Alternatively, a plate-shaped blade, bar, or the like may be used as the leveling section 12.

The powder removing section 13 is means that removes the powder 20 attached to the leveling section 12. In the example illustrated in FIG. 2, a plate-shaped member coming into contact with the leveling section 12 to remove the powder 20 is used as the powder removing section 13. The powder removing section 13 reciprocates together with the leveling section 12 while being in contact with the leveling section 12.

The modeling liquid applying section 5 includes a head 52 and a carriage 51.

The head 52 is means that applies the modeling liquid 10 to the powder layer 31 formed in the modeling tank 22. The head 52 is, for example, an inkjet head and includes a nozzle row in which a plurality of nozzles are aligned. A method of applying the modeling liquid may be a dispenser method, in addition to an inkjet method. Alternatively, four heads 52 may be configured with, for example, cyan modeling liquid, magenta modeling liquid, yellow modeling liquid, and black modeling liquid so that a color modeled object can be modeled.

The carriage 51 is means that is equipped with the head 52 and causes the head 52 to reciprocate in two directions (X direction and Y direction in FIG. 2) orthogonal to each other on a horizontal plane and in the vertical direction (Z direction in FIG. 2).

FIG. 3 is a block diagram illustrating an example controlling section of the modeling device 100.

A controlling section 500 illustrated in FIG. 3 includes a central processing unit (CPU) 501, a read only memory (ROM) 502 storing a computer program and other fixed data for executing control, and a random access memory (RAM) 503 temporarily storing modeling data and the like. The controlling section 500 receives the modeling data from a modeling data generating device 600, such as an external computer.
The modeling data generating device 600 generates the modeling data in which the modeled object in the final form is sliced by each modeled layer 30, and the controlling section 500 controls a modeling operation for each modeled layer 30 on the basis of the modeling data. Note that the modeling data generating device 600 may be separate from or integrated with the modeling device 100. The controlling section 500 may be disposed inside the modeling device 100 or outside the modeling device 100.

### Modeling Process

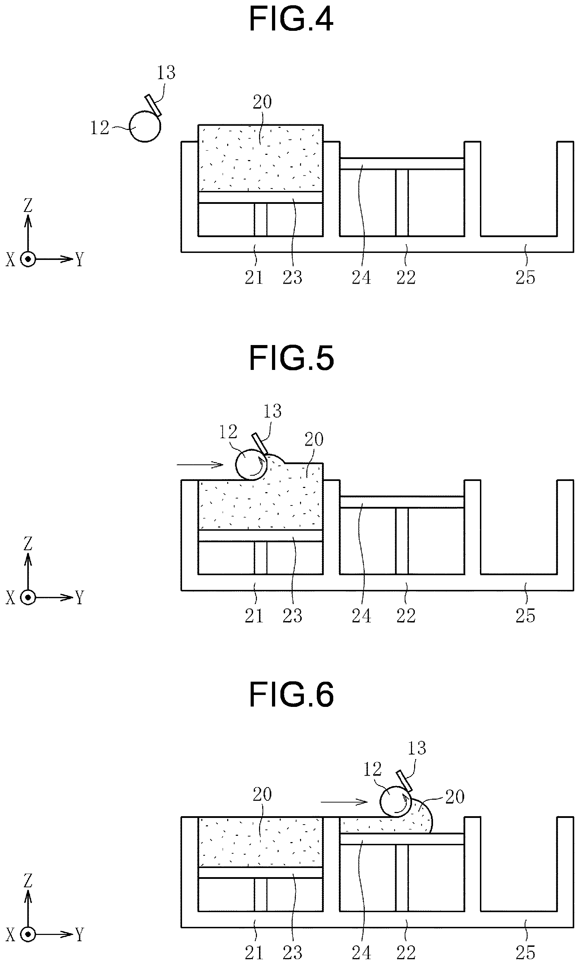

Next, the modeling operation (modeling process) at the modeling device 100 will be described with reference to FIGS. 4 to 9.

First, as illustrated in FIG. 4, with the powder 20 housed in the feed tank 21, the height of the feed stage 23 is adjusted so that the top surface of the powder 20 is positioned above the top surface level of the feed tank 21 by a predetermined thickness. On the other hand, the height of the modeling stage 24 of the modeling tank 22 is adjusted so as to be positioned below the top surface level of the modeling tank 22 by a desired thickness of the powder layer 31.

With the heights of the feed stage 23 and the modeling stage 24 adjusted as described above, as illustrated in FIG. 5, the leveling section 12 is moved in the horizontal direction while being rotated, whereby the powder 20 positioned above the top surface level of the feed tank 21 is pushed and moved by the leveling section 12.

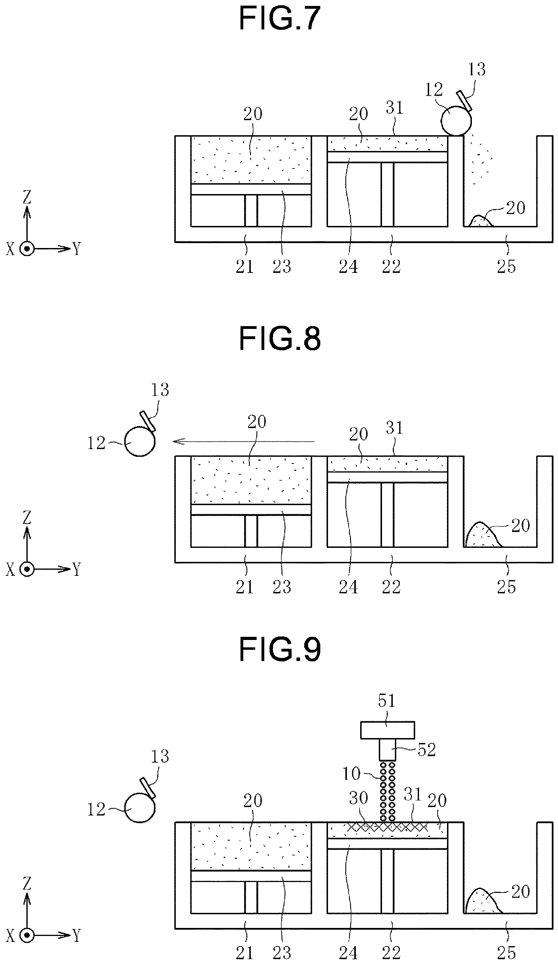

Then, as illustrated in FIG. 6, the leveling section 12 moves from the feed tank 21 to the modeling tank 22, and the powder 20 is thus fed onto the modeling stage 24. At this time, the leveling section 12 moves parallel to a stage surface (top surface) of the modeling stage 24, so that the powder 20 on the modeling stage 24 is leveled by the leveling section 12, which forms the powder layer 31 of a uniform thickness on the modeling stage 24 as illustrated in FIG. 7.

As illustrated in FIG. 7, when the leveling section 12 moves to an edge of the modeling tank 22, the leveling section 12 is stopped from moving. This forms the powder layer 31 over the entire modeling stage 24. The excess powder 20 overflowing from the modeling tank 22 falls into and is housed in the excess powder tank 25. Then, as illustrated in FIG. 8, the leveling section 12 is moved in the opposite direction and returns to an initial position.

Then, as illustrated in FIG. 9, the modeling liquid 10 is applied from the head 52 to the powder layer 31 to bind the powder 20, thereby forming the modeled layer 30. To be specific, the modeling liquid 10 containing resin is attached to the powder 20, thereby binding the powder 20 together to form the modeled layer 30. As the resin, for example, polyvinyl alcohol (PVA), polyvinyl pyrrolidone (PVP), or the like is used. The modeling liquid 10 is not limited to containing the above resin and may contain a cross-linking agent and an organic solvent. In this case, when the modeling liquid 10 is applied to the powder 20, resin covering the powder 20 dissolves and cross-links to bind the powder 20.

After the first modeled layer 30 is formed in this way, the heights of the feed stage 23 and the modeling stage 24 are adjusted and the leveling section 12 is reciprocated again as described above, whereby the second powder layer 31 is formed on the modeling stage 24. Then, the modeling liquid 10 is applied from the head 52 to the second powder layer 31 to form the second modeled layer 30. Then, the same process is repeated to stack a plurality of the modeled layers 30 to model the modeled object (three-dimensional modeled object).

The excess powder 20 housed in the excess powder tank 25 may be returned to the feed tank 21. For example, the powder 20 in the excess powder tank 25 may be returned to a powder feed device disposed above the feed tank 21, and at the time of an initial operation of modeling and if the amount of the powder in the feed tank 21 is decreased, the powder 20 stored in the powder feed device may be fed to the feed tank 21. Means that returns the powder 20 to the powder feed device includes a screw conveyor method using a screw, a pneumatic transportation method using air, and the like.

### Overall Configuration of Drying Device

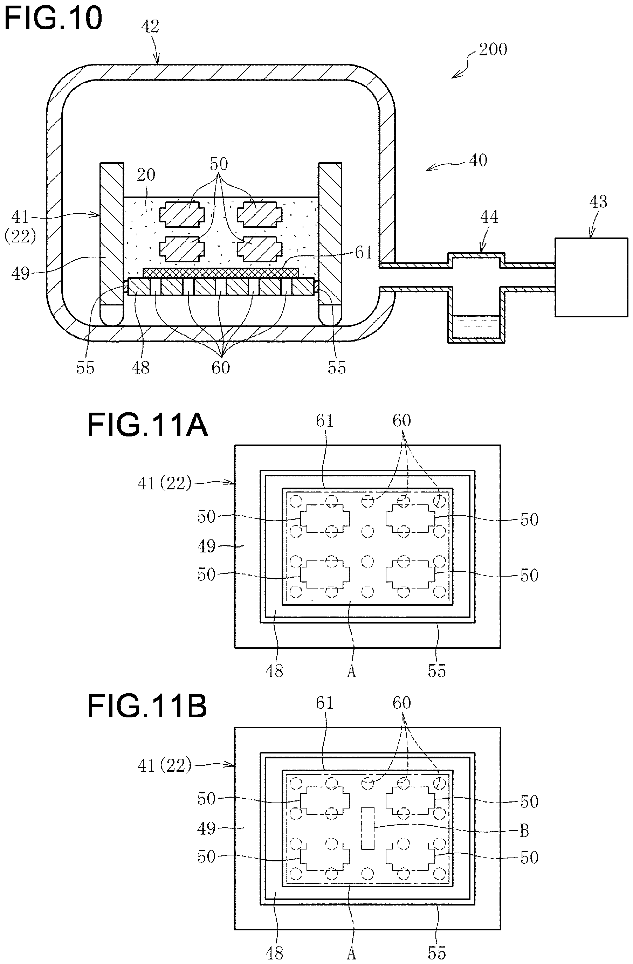

Next, an overall configuration of the drying device 200 according to the first embodiment of the present invention will be described with reference to FIG. 10.

As illustrated in FIG. 10, the drying device 200 includes a housing section 41 and a drying section 40. The drying section 40 includes a processing chamber 42, a pressure reducing section 43, and a retrieving section 44.

The housing section 41 houses the modeled objects containing the powder. In this embodiment, as the housing section 41, the modeling tank 22 of the modeling device 100 is used. The housing section 41 is configured detachable from the feed tank 21 and the excess powder tank 25. The housing section 41 is formed to have a box shape having an open top portion. To be specific, the housing section 41 includes the bottom 48 disposed horizontal to an installation surface for the drying device 200 and a side wall 49 disposed extending upward from the bottom 48. Between the bottom 48 and the side wall 49, a seal member 55 is disposed that prevents the powder 20 from falling down. The housing section 41 is configured detachably, so that, when the modeled objects are modeled in the modeling tank 22 through the above-described modeling process, the modeled objects can be housed in the processing chamber 42 as they are together with the housing section 41. Note that the housing section 41 is not limited to the same container as the modeling tank 22 and may be a different container from the modeling tank 22. Instead of the modeling tank 22, the modeling stage 24 may be moved from the modeling device 100 to the drying device 200 and installed on the bottom 48 of the housing section 41. Similar to the modeling stage 24 of the modeling tank 22, the bottom 48 of the housing section 41 can move up and down in the vertical direction.

The processing chamber 42 is configured to have a space enough to house the housing section 41 and to ensure airtightness. The processing chamber 42 is provided with a heat source, such as a heater, and can heat the inside of the processing chamber 42 with the heat source. Instead of the heat source, such as a heater, a warm air generating device sending warm air into the processing chamber 42 may be provided.

The pressure reducing section 43 is means that reduces pressure in the processing chamber 42 including the housing section 41. Example means that reduces pressure in the processing chamber 42 includes a vacuum pump. Not only a vacuum pump but also another known device that can control pressure in the processing chamber 42 may be used. By reducing the pressure, liquid, such as a solvent contained in the housing section 41, is vaporized and can be sent to the outside of the housing section 41.

The retrieving section 44 is means that cools and retrieves the solvent vaporized in the processing chamber 42. The retrieving section 44 retrieves the liquid vaporized with the pressure reduced at the pressure reducing section 43. The retrieving section 44 is disposed at a position in a flow channel connecting the processing chamber 42 to the pressure reducing section 43.

### Drying Process

When drying processing is performed, the modeled objects modeled by the modeling device 100 are dried by the drying section 40. To be specific, the modeled objects modeled by the modeling device 100 are taken out together with the housing section 41, the housing section 41 is housed in the processing chamber 42, and the processing chamber 42 is hermetically closed. Here, the modeled objects subjected to the drying processing are the modeled objects before subjected to the sintering processing and with the powder 20 bound together by the modeling liquid 10. The modeled objects subjected to the drying processing at the drying section 40, that is, the modeled objects before the sintering processing and with the powder 20 bound together are hereinafter referred to as "powder bound objects".

As illustrated in FIG. 10, in the housing section 41 housed in the processing chamber 42, the powder 20 to which the modeling liquid 10 is not applied is also housed in addition to powder bound objects 50. This allows the powder bound objects 50 to be dried while retaining their shapes. Note that, if the powder bound objects 50 have simple shapes or the like, the housing section 41 may house only the powder bound objects 50 and may not house the powder 20 to which the modeling liquid 10 is not applied. After the processing chamber 42 is hermetically closed, the inside of the processing chamber 42 is heated by the heat source and reduced in pressure by the pressure reducing section 43, whereby the liquid component, such as a solvent or water contained in the powder bound objects 50, is vaporized. This removes the liquid component from the powder bound objects 50 and dries the powder bound objects 50. Note that the drying processing may be performed by heating the inside of the processing chamber 42 under atmospheric pressure without pressure reduction; however, reduction in pressure in the processing chamber 42 can lower the boiling point of the liquid component, so that vaporization of the liquid component is accelerated, which can shorten the time for the drying processing.

Vapor generated by vaporizing the liquid component in the powder bound objects 50 passes through the powder 20 present in the vicinity of the powder bound objects 50 and is discharged from the top opening of the housing section 41 and the like. The vapor is then cooled and liquefied by the retrieving section 44 and retrieved into the retrieving section 44.

Here, the housing section 41 according to this embodiment has a top portion open, so that the vapor generated from the powder bound objects 50 in the drying processing is mainly discharged through the top opening of the housing section 41. Unfortunately, if the vapor discharge efficiency is low at this time, the vapor concentration in the housing section 41 is increased, which inhibits the vaporization of the liquid component from the powder bound objects 50. In this case, the drying speed of the powder bound objects 50 is decreased, which lengthens the time taken for the drying processing. Thus, to increase the drying efficiency, it is preferable to efficiently discharge the vapor in the housing section 41. In addition, there is a drying method using heating and air blow. Unfortunately, depending on the condition, air blow may raise the powder or crack the modeled object, decreasing the modeling quality. If an organic solvent having a particularly high boiling point is used as the modeling liquid, the drying energy is decreased unless the drying is performed with pressure reduction. For example, if the drying is performed by heating to 200°C or higher under normal pressure, degradation of the resin contained in the modeling liquid and the like may occur in addition to a decrease in the energy efficiency.

From this viewpoint, in this embodiment, the housing section 41 has the following configuration to efficiently discharge the vapor in the housing section 41. A configuration of the housing section 41 according to this embodiment will be described in detail below.

### Configuration of Housing Section

As illustrated in FIG. 10, in this embodiment, the housing section 41 includes the bottom 48 including air vents 60. The air vents 60 are disposed in the bottom 48 except ends. That is, the air vents 60 are disposed between one end and the other end of the bottom 48. In other words, the air vents 60 are disposed in a central region of the bottom 48. To enhance air permeability of the housing section 41, it is preferable to have a plurality of the air vents 60 in the bottom 48 of the housing section 41. The air vents 60 are provided passing through the bottom 48 in the up-down direction, and the inside and the outside of the housing section 41 communicate via the air vents 60. The air vents 60 are formed to have a size allowing the powder 20 and gas pass therethrough.

Thus, in this embodiment, if vapor is generated in the housing section 41 in the drying processing, the vapor is discharged not only from the top opening of the housing section 41 but also from the air vents 60. The vapor discharged from the air vents 60 passes through a gap between the bottom surface of the housing section 41 (bottom 48) and the floor surface of the processing chamber 42, reaches the retrieving section 44, and is liquefied and retrieved in the retrieving section 44.

In this way, in this embodiment, the air vents 60 disposed in the bottom 48 of the housing section 41 allow the vapor to be discharged from these air vents 60, so that the amount of the vapor discharged can be increased in comparison with a case where the vapor is discharged only from the top opening. The air vents 60 disposed in the bottom 48 facing the top opening of the housing section 41 enable effective pressure reduction in the drying. This can accelerate the drying of the powder bound objects 50. Note that, even if the air vents 60 are disposed in the side wall 49, the vapor can be discharged from the air vents 60; however, if the bottom 48 can move up and down in the vertical direction, the moving up and down of the bottom 48 degrades the side wall 49. Thus, the air vents 60 are preferably disposed in the bottom 48 rather than in the side wall 49.

The bottom 48 includes the air vents 60 and a porous member 61. The porous member 61 is installed in the housing section 41 so as to cover the air vents 60. This prevents clogging of the air vents 60 with the powder 20. The porous member 61 is a plate-shaped member placed on the air vents 60. If the air vents 60 are clogged, the air permeability decreases, inhibiting efficient vapor discharge, so that the drying speed of the powder bound objects 50 is decreased. In this case, maintenance work for restoring the air permeability by, for example, removing the powder 20 from the air vents 60 is needed. Unfortunately, work of removing the powder 20 from the air vents 60 is expected not to be easy. Thus, if the air vents 60 are clogged, the bottom 48 or the entire housing section 41 including the bottom 48 needs to be replaced, which causes problems of expensive replacement cost in addition to troublesome replacement work.

Thus, in this embodiment, to enhance maintainability while ensuring the air permeability, the porous member 61 is placed in the housing section 41.

FIGS. 11A and 11B are plan views of the housing section 41, viewed from above, according to the first embodiment of the present invention. The porous member 61 is placed so as to cover the air vents 60. In FIGS. 11A and 11B, the air vents 60 disposed in the bottom 48 are all covered by the porous member 61. Note that, in FIGS. 11A and 11B, the rows of the air vents 60 aligned longitudinally are arranged at regular intervals therebetween, and the rows of the air vents 60 aligned laterally are also arranged at regular intervals therebetween.

In this way, with the porous member 61 placed so as to cover the air vents 60, a large number of holes of the porous member 61 are placed so as to communicate with the air vents 60, which ensures the air permeability of the air vents 60. This allows the vapor generated from the powder bound objects 50 in the housing section 41 in the drying processing to pass through the holes of the porous member 61 and the air vents 60 in the bottom 48 in order and to be discharged to the outside of the housing section 41.

The porous member 61 has the holes smaller than the air vents 60. This can prevent clogging of the air vents 60 with the powder 20. On the other hand, the holes of the porous member 61 may be clogged with the powder 20 entering there. However, even if the porous member 61 is clogged, replacement of that porous member 61 with a new, different porous member 61 can readily restore air permeability. The porous member 61 is configured separate from the housing section 41 and detachable from the housing section 41, so that the porous member 61 can be readily replaced. Thus, with the configuration according to this embodiment, there is no need to remove the powder from a clogged hole or to replace the bottom 48 or the entire housing section 41 including the bottom 48, which enhances maintainability.

Materials of the porous member 61 include resin materials, such as polypropylene, polyethylene, polymethyl methacrylate, and fluoropolymers, ceramics made from alumina, zirconia, silica, silicon carbide (SiC), or composites of these materials, and aluminum, stainless steel, nickel, copper, titanium, or alloys of these materials. Among these, ceramics or metal materials are preferred from the standpoint of ensuring heat resistance and strength of the porous member 61. If the porous member 61 is composed of a metal material, heat can be efficiently transmitted to the powder bound objects 50, so that the drying of the powder bound objects 50 can be accelerated. Aluminum, copper, or alloys of these materials are especially preferred because they have good thermal conductivity.

The holes of the porous member 61 preferably have a size preventing the powder 20 from passig therethrough and allowing gas to pass therethrough. For example, even when metal powder of an aluminum alloy having an average particle diameter of 55 um is used as the powder 20 and an alumina plate having an average hole diameter of 60 um, a porosity of 40% or greater and 45% or less, and a thickness of 5 mm is used as the porous member 61, the powder 20 can be prevented from passing through the porous member 61. In this case, the powder 20 having an average particle diameter of 55 um includes the powder having a particle diameter (55 um or smaller) smaller than the average hole diameter (60 um) of the porous member 61; however, the porous member 61 being thick (in this case, 5 mm) can also inhibit the powder having small particle diameters from passing therethrough. The thickness of the porous member 61 is 5 mm, so that the porous member 61 also has rigidity.

Note that the value of the porosity of the porous member 61 is measured by a gravimetric method. The average hole diameter of the porous member 61 can be observed using, for example, a scanning electron microscope (SEM).

The housing section 41 includes a modeling region A where the modeled objects are modeled. The porous member 61 is preferably placed so as to overlap the modeling region A where the powder bound objects 50 are modeled, when viewed in a direction orthogonal to a wall surface (bottom 48) having the air vents 60. However, as illustrated in FIG. 11B, the air vents 60 may not be in a center B of the modeling region A. That is, the central region of the bottom 48 where the air vents 60 are disposed should be inside the modeling region A and need not necessarily be in the center B of the modeling region A. The porous member 61 is placed so as to overlap the modeling region A. This allows the vapor generated in the housing section 41 to be more efficiently discharged. Note that, the modeling region A indicated hear means not only a region where the powder bound objects 50 are actually modeled but also a region where the powder bound objects 50 can be modeled, that is, a region where the modeling liquid 10 can be applied.

In this way, the air vents 60 and the porous member 61 placed so as to overlap the modeling region A allow the vapor generated from the powder bound objects 50 to be efficiently discharged through the porous member 61 and the air vents 60. In FIGS. 11A and 11B, all the air vents 60 and the entire porous member 61 are placed so as to overlap the modeling region A; however, only some of the air vents 60 or only part of the porous member 61 may be placed so as to overlap the modeling region A.

The size and number of the air vents 60 may be determined as appropriate in consideration of the rigidity of the porous member 61 placed on the bottom 48 and desired air permeability. For example, if the porous member 61 has low rigidity and if the air vents 60 are large, the weight of the powder 20 in the housing section 41 may cause deformation in the porous member 61, such as bending in positions at the air vents 60. In this case, it is preferable that the size of the air vents 60 be small. If the air vents 60 are small, air permeability can be ensured by increasing the number of the air vents 60. The air vents 60 are not limited to having a circular shape and may have various shapes, such as a rectangular or polygonal shape.

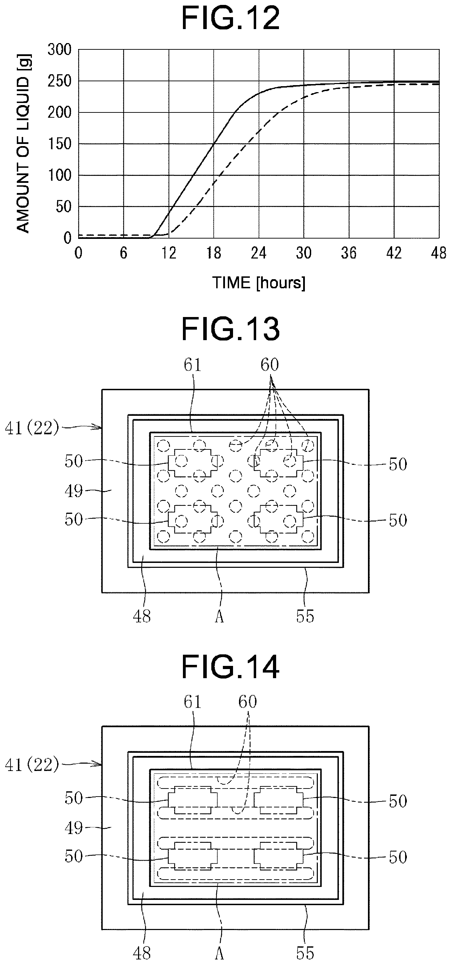

FIG. 12 is a graph illustrating results of tests that have been conducted to check the speed of the drying processing in the configuration according to the first embodiment of the present invention and in a comparative example differing therefrom.

In the comparative example, a housing section 41 having no air vents 60 or porous member 61 is used. The other configurations are the same as the embodiment of the present invention. A powder bound object 50 in each of the housing section 41 according to the first embodiment of the present invention and the housing section 41 according to the comparative example is subjected to drying processing under the same conditions, and the amount of liquid (liquefied vapor) retrieved by the retrieving section 44 in the drying processing is measured with a liquid level measuring instrument.

In FIG. 12, the graph illustrated by the solid line indicates the result of the first embodiment of the present invention, and the graph illustrated by the dashed line indicates the result of the comparative example. As illustrated in FIG. 12, in the first embodiment of the present invention, the timing of an increase in the amount of the liquid retrieved by the retrieving section 44 is earlier than in the comparative example. By this, the saturation time of the liquid retrieved by the retrieving section 44 in the first embodiment of the present invention is approximately 26 hours, which is approximately 10 hours shorter than the saturation time (approximately 36 hours) in the comparative example. As a result, the drying time in the first embodiment of the present invention is shortened by approximately 10 hours (by approximately 28%) in comparison with that in the comparative example. Hence, it can be said that vapor is generated earlier and drying is accelerated in the first embodiment of the present invention than in the comparative example.

As described above, according to the first embodiment of the present invention, enhancement of the air permeability of the housing section 41 can accelerate vaporization of the liquid component in the powder bound object 50 and shorten the time for the drying processing, and energy consumption can thus be reduced. Furthermore, according to the first embodiment of the present invention, by simply replacing the porous member 61, the air permeability can be readily restored, so that the drying device having excellent maintainability can be provided. Contribution to the Sustainable Development Goals (SDGs), Led by the United Nations

Each embodiment of the present invention can reduce energy consumption, thus contributing to Goals 12 and 13 of the SDGs.

Next, other embodiments differing from the first embodiment of the present invention will be described. Parts differing from the first embodiment of the present invention will mainly be described below, and description for the same parts will be omitted as appropriate.

### Second Embodiment of the Present Invention

FIG. 13 is a plan view of a housing section 41 according to a second embodiment of the present invention.

Air vents 60 in FIG. 13 are arranged in a staggered pattern. That is, in FIG. 13, the air vents 60 in laterally adjacent rows among the longitudinally aligned rows of the air vents 60 are arranged shifting in longitudinal positions.

The air vents 60 arranged in a staggered pattern in this way enable dense arrangement of the air vents 60 in comparison with the configuration where the air vents 60 are arranged so as not to shift in longitudinal and lateral positions (see FIGS. 11A and 11B). This can increase the opening area of the air vents 60 per unit area, which enhances the air permeability.

### Third Embodiment of the Present Invention

FIG. 14 is a plan view of a housing section 41 according to a third embodiment of the present invention.

Air vents 60 in FIG. 14 are composed of long holes extending laterally. Note that the air vents 60 are long holes extending laterally in FIG. 14 but may be long holes extending longitudinally.

The air vents 60 composed of the long holes can increase the opening area of the air vents 60 per unit area, which enhances the air permeability. Even if the air vents 60 are composed of such long holes, an increase in the thickness of the porous member 61 or the porous member 61 made from a material having a high rigidity can ensure the rigidity of the porous member 61 and can prevent the porous member 61 from being deformed by the weight of the powder 20.

### Fourth Embodiment of the Present Invention

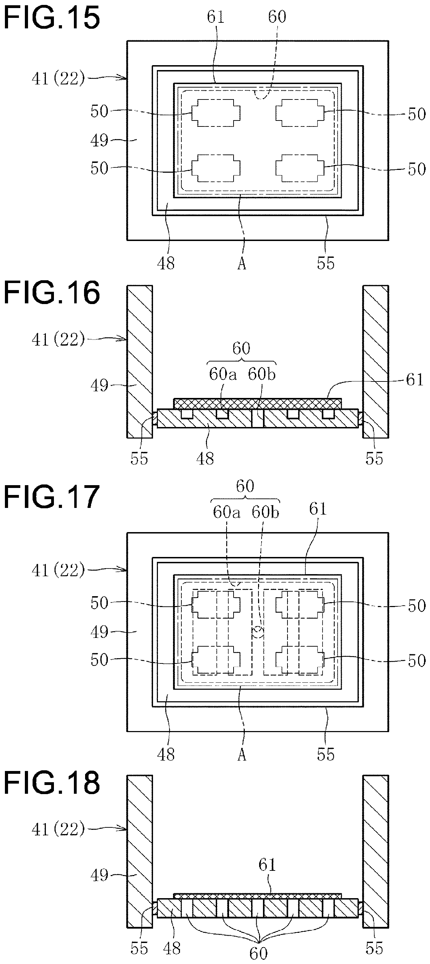

FIG. 15 is a plan view of a housing section 41 according to a fourth embodiment of the present invention.

An air vent 60 in FIG. 15 is composed of a single large hole. That is, the single air vent 60 is placed so as to stretch over the entire region below a plurality of the powder bound objects 50.

In this case, also, the opening area of the air vents 60 per unit area can be increased, which enhances the air permeability. Even if the air vent 60 is composed of such a large hole, an increase in the thickness of the porous member 61 or the porous member 61 made from a material having a high rigidity can prevent deformation in the porous member 61.

### Fifth Embodiment of the Present Invention

FIG. 16 is a sectional view of a housing section 41 according to a fifth embodiment of the present invention, and FIG. 17 is a plan view of the housing section 41 according to the fifth embodiment.

An air vent 60 in FIGS. 16 and 17 includes groove portions 60a and a hole portion 60b. The groove portions 60a are disposed in the top surface of the bottom 48, are regions where recesses of the air vent 60 are formed, and do not pass through the bottom 48 in the up-down direction. The hole portion 60b is a region where the air vent 60 is open and passes through a center of the bottom 48 in the up-down direction. The air vent 60 includes a plurality of the groove portions 60a. One of the groove portions 60a is a region common to an upper portion in the position where the hole portion 60b is disposed, in the center of the top surface of the bottom 48. The groove portion 60a communicates with the hole portion 60b in the center of the bottom 48. Thus, if vapor is generated in the housing section 41, the vapor passes through the groove portion 60a and is discharged from the hole portion 60b. The remainder of the groove portions 60a is disposed over a wide area of the bottom 48. These groove portions 60a do not communicate with the hole portion 60b and do not pass through the bottom 48 in the up-down direction.

Thus, the groove portions 60a can inhibit a decrease in the rigidity of the bottom 48 in comparison with the case where a plurality of the air vents 60 passing through the bottom 48 are formed. Hence, the configuration according to this embodiment is suitable especially when it is difficult to ensure the rigidity of the bottom 48, because the rigidity is difficult to ensure depending on the thickness of the bottom 48 and the size of the housing section 41.

### Sixth Embodiment of the Present Invention

FIG. 18 is a sectional view of a housing section 41 according to a sixth embodiment of the present invention.

A porous member 61 in FIG. 18 is composed of a sheet-like member having flexibility.

The porous member 61 composed of the sheet-like member in this way can facilitate replacement work of the porous member 61 and reduce replacement cost. As the sheet-like porous member 61, a film having a nonwoven fabric, a mesh, a pore structure, or a porous structure made from cellulose, polyethylene, polyester, polypropylene, nylon, PET, fluoropolymers, aramid, or the like can be used. Alternatively, a composite of these materials and structures may be used. If the heating and drying processing is performed at a high temperature, it is preferable to use a sheet made from fluoropolymers or aramid having high heat resistance. Alternatively, a commercially available sheet, such as a filter and a filter paper, may be used.

### Seventh Embodiment of the Present Invention

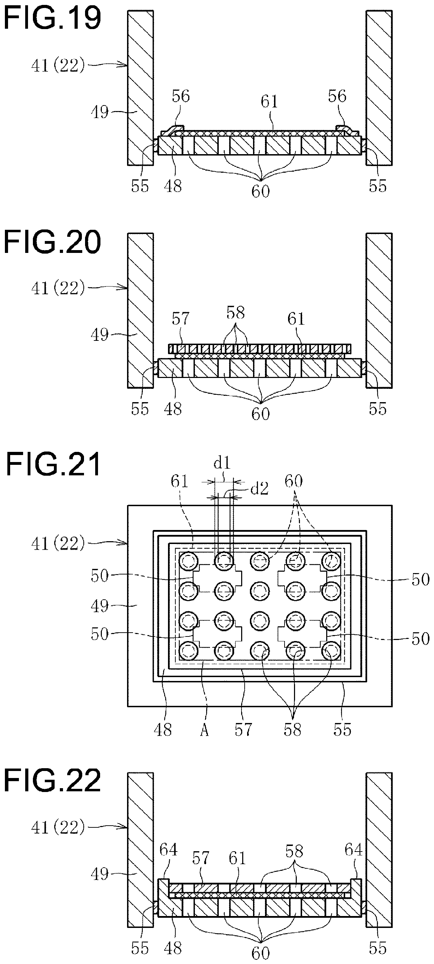

FIG. 19 is a sectional view of a housing section 41 according to a seventh embodiment of the present invention.

The porous member 61 in FIG. 19 is fixed to the bottom 48 with fixing members 56, such as adhesive tape.

When the powder layer 31 is formed on the housing section 41 in the above-described modeling process (see FIG. 6), the porous member 61 placed on the bottom 48 may be affected by the powder 20 pushed and moved by the horizontal movement of the leveling section 12 and may thus be shifted from a predetermined position. In particular, the porous member 61 composed of the sheet-like member as illustrated in FIG. 19 is light and thus readily shifts in position. Thus, as in this embodiment, by fixing the ends of the porous member 61 to the bottom 48 with the fixing members 56, the porous member 61 can be prevented from shifting in position.

For example, in FIG. 19, if the leveling section 12 pushes and moves the powder 20 from the left side toward the right side, only the left end of the porous member 61 (upstream end in the moving direction of the leveling section 12) may be fixed with the fixing member 56. Note that the fixing position of the porous member 61 may be changed to the entire edge, some of the sides, a corner, or the like of the porous member 61 as appropriate depending on how the position is shifted.

### Eighth Embodiment of the Present Invention

FIG. 20 is a sectional view of a housing section 41 according to an eighth embodiment of the present invention.

If the porous member 61 is in a sheet form as described above, the porous member 61 may lift off from the bottom 48. Such lifting-off of the porous member 61 is caused by bending of the porous member 61 itself, expansion or deformation of the porous member 61 due to a change in the surrounding environment, such as temperature and humidity, or the like. In this case, a gap is generated between the bottom 48 and the porous member 61, which may cause the powder 20 to leak through the air vents 60.

Thus, in the eighth embodiment illustrated in FIG. 20, a pressing member 57 made from a material having greater density than the porous member 61 is disposed on the porous member 61. Density is mass per unit volume. With this, the weight of the pressing member 57 can prevent the porous member 61 from lifting off. The pressing member 57 presses the porous member 61, so that the porous member 61 can also be prevented from shifting in position with horizontal movement of the leveling section 12. The pressing member 57 is preferably made from a material having a certain weight, such as stainless steel, aluminum, or other metal materials.

The pressing member 57 includes a plurality of through holes 58 passing through the pressing member 57. Thus, even if the pressing member 57 is placed on the porous member 61, the air permeability can be ensured. That is, the through holes 58 of the pressing member 57 communicate with the air vents 60 of the bottom 48 via the holes of the porous member 61, whereby the vapor in the housing section 41 can be discharged from the air vents 60 via the through holes 58 and the holes of the porous member 61.

### Ninth Embodiment of the Present Invention

FIG. 21 is a plan view of a housing section 41 according to a ninth embodiment of the present invention.

The positions of through holes 58 of a pressing member 57 in FIG. 21 are arranged corresponding to the positions of the air vents 60 of the bottom 48. The numbers of the through holes 58 and the air vents 60 are the same.

That is, the through holes 58 of the pressing member 57 are arranged so as to overlap the air vents 60 when viewed in the direction orthogonal to the bottom 48. This can ensure good air permeability. Furthermore, the through holes 58 are formed to be larger than the air vents 60. That is, a diameter d1 of the through holes 58 is greater than a diameter d2 of the air vents 60. This can enhance the air permeability.

### Tenth Embodiment of the Present Invention

FIG. 22 is a sectional view of a housing section 41 according to a tenth embodiment of the present invention.

In the tenth embodiment illustrated in FIG. 22, collision sections 64 are disposed protruding at ends of the top surface of the bottom 48. The collision sections 64 may be configured integral with the bottom 48 by, for example, cutting the top surface of the bottom 48 or may be configured by separate members fixed to the top surface of the bottom 48.

The collision sections 64 are members colliding with the pressing member 57 and function as a restricting section restricting horizontal movement (shifting in position) of the pressing member 57. To be more specific, even if the pressing member 57 is subjected to horizontal force due to movement of the leveling section 12 in forming the powder layer, the collision sections 64 collide with the pressing member 57, which can restrict horizontal movement (shifting in position) of the pressing member 57. That is, even if the pressing member 57 moves horizontally, the pressing member 57 collides with the collision sections 64, whereby movement of the pressing member 57 is restricted. This can also prevent the porous member 61 from shifting in position with shifting in position of the pressing member 57.

The collision section 64 may be disposed on the upstream side and the downstream side of the pressing member 57 in the moving direction of the leveling section 12 pushing and moving the powder 20 or only on the downstream side. The collision sections 64 may be disposed not only on the upstream side and the downstream side of the pressing member 57 in the moving direction of the leveling section 12 but also on the upstream side and the downstream side in a direction orthogonal to the moving direction.

### Eleventh Embodiment of the Present Invention

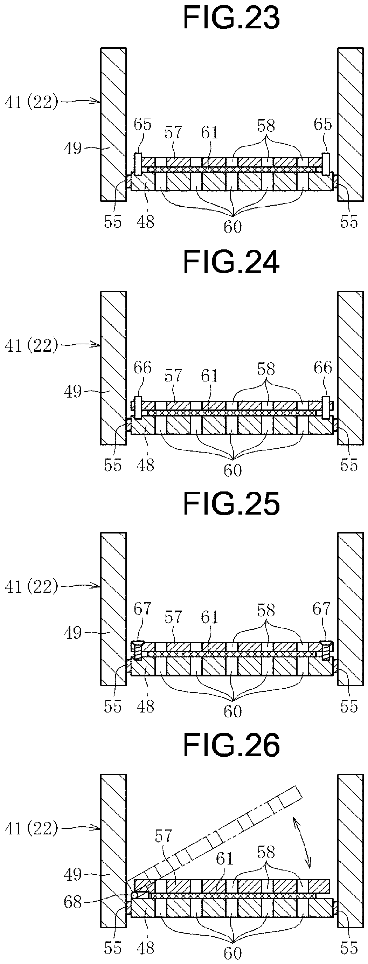

FIG. 23 is a sectional view of a housing section 41 according to an eleventh embodiment of the present invention.

In the eleventh embodiment illustrated in FIG. 23, as a restricting section restricting shifting in horizontal position of the pressing member 57, pins 65 are used. The pins 65 are, for example, inserted into the top surface of the bottom 48, thereby being attached.

In this case, in comparison with the case where the collision section 64 is disposed on the bottom 48, the design and machining of the bottom 48 is simple. Similar to the collision section 64, the pin 65 may be disposed on the upstream side and the downstream side of the pressing member 57 in the moving direction of the leveling section 12 (direction of pushing and moving the powder 20) or only on the downstream side. Furthermore, the pins 65 may be disposed not only on the upstream side and the downstream side in the moving direction of the leveling section 12 but also on the upstream side and the downstream side in the direction orthogonal to the moving direction.

### Twelfth Embodiment of the Present Invention

FIG. 24 is a sectional view of a housing section 41 according to a twelfth embodiment of the present invention.

In the twelfth embodiment illustrated in FIG. 24, pins 66 are used to fix the pressing member 57 to the bottom 48. That is, in this case, the pins 66 function as a fixing section fixing the pressing member 57 and differ from the embodiment illustrated in FIG. 23 in that pin holes for inserting the pins 66 are formed in the pressing member 57.

In this way, the pins 66 fixing the pressing member 57 can more effectively prevent each of the pressing member 57 and the porous member 61 from shifting in position with horizontal movement of the leveling section 12.

### Thirteenth Embodiment of the Present Invention

FIG. 25 is a sectional view of a housing section 41 according to a thirteenth embodiment of the present invention.

In the thirteenth embodiment illustrated in FIG. 25, screws 67 are used as a fixing section fixing the pressing member 57 to the bottom 48. The screws 67 are inserted into insertion holes disposed in the pressing member 57, screwed into threaded holes disposed in the top surface of the bottom 48, and fixed.

Even if the screws 67 are used as the fixing section in this way, the pressing member 57 can securely be fixed to the bottom 48, which can more effectively prevent each of the pressing member 57 and the porous member 61 from shifting in position with horizontal movement of the leveling section 12.

### Fourteenth Embodiment of the Present Invention

FIG. 26 is a sectional view of a housing section 41 according to a fourteenth embodiment of the present invention.

In the fourteenth embodiment illustrated in FIG. 26, a hinge member 68 is used as a fixing section fixing the pressing member 57 to the bottom 48. In this case, the pressing member 57 is fixed to the bottom 48 via the hinge member 68, so that opening and closing of the hinge member 68 pivots an end, on a side opposite to a side having the hinge member 68, of the pressing member 57 in the up-down direction. To place the porous member 61 below the pressing member 57, the pressing member 57 can be pivoted upward as illustrated by the chain double-dashed line in FIG. 26. The attaching position of the hinge member 68 may be on the downstream side of the pressing member 57 in the moving direction of the leveling section 12 (direction of pushing and moving the powder 20) but is preferably on the upstream side of the pressing member 57 to more reliably prevent the pressing member 57 from shifting in position.

Even if the hinge member 68 is used as the fixing section in this way, the pressing member 57 can securely be fixed to the bottom 48, which can more effectively prevent each of the pressing member 57 and the porous member 61 from shifting in position with horizontal movement of the leveling section 12. In comparison with the configuration in which the pins 66 (see FIG. 24) or the screws 67 (see FIG. 25) are used to fix the pressing member 57, replacement work of the porous member 61 can be facilitated (because there is no need to attach and detach the pins 66 or the screws 67).

### Fifteenth Embodiment of the Present Invention

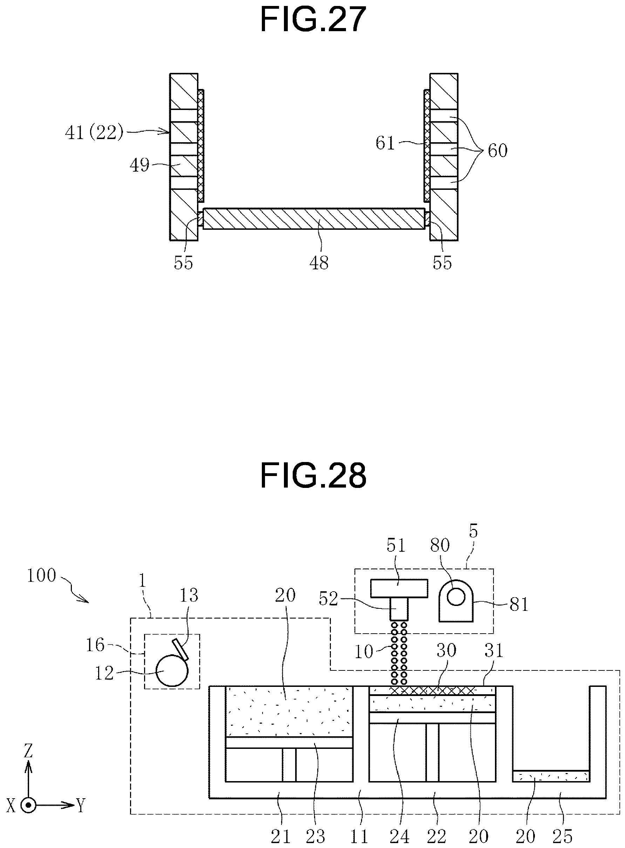

FIG. 27 is a sectional view of a housing section 41 according to a fifteenth embodiment of the present invention.

In the fifteenth embodiment illustrated in FIG. 27, air vents 60 are disposed in the side wall 49, not in the bottom 48, which differs from each of the above-described embodiments. In this case, the porous member 61 is attached to the side wall 49 so as to cover the air vents 60. The porous member 61 can be attached to the side wall 49 by a method selected as appropriate, for example, by fixing with a screw.

Similar to the above-described embodiments, even with the air vents 60 disposed in the side wall 49 and the porous member 61 disposed covering the air vents 60 in this way, the vapor in the housing section 41 can be discharged to the outside through the holes of the porous member 61 and the air vents 60. Thus, the air permeability is enhanced. If the porous member 61 is clogged, replacement of only the porous member 61 can restore air permeability, which excels in maintainability.

In this embodiment, the air vents 60 and the porous member 61 are also preferably placed so as to overlap the modeling region A (see FIGS. 11A and 11B) when viewed in a direction orthogonal to a wall surface of the side wall 49 where the air vents 60 are formed. Similar to the above-described embodiments, this allows the vapor generated from the powder bound object 50 to be efficiently discharged through the porous member 61 and the air vents 60.

The embodiments of the present invention have been described. The drying device according to the present invention is not limited to the above-described embodiments and can be designed and modified as appropriate without departing the gist of the invention.

In each of the above-described embodiments, an example configuration in which the air vent 60 and the porous member 61 are disposed at only one of the bottom 48 and the side wall 49; however, the air vent 60 and the porous member 61 may be disposed at both the bottom 48 and the side wall 49. If the air vent 60 and the porous member 61 are disposed at both the bottom 48 and the side wall 49, the air permeability is further enhanced, and the drying time can be expected to be further shortened.

The drying device according to the present invention is not limited to being applied to the modeling system including the modeling device 100 using the powder lamination modeling system as illustrated in FIG. 2 and can also be applied to a modeling system including a modeling device 100 using the high-speed sintering process (HSS) as illustrated in FIG. 28.

### Another Configuration of Modeling Device

A configuration of a modeling device using the HSS process will be briefly described below with reference to FIG. 28.

As illustrated in FIG. 28, in the modeling device 100 using the HSS process, a modeling liquid applying section 5 includes a head 52 that applies modeling liquid 10 containing a radiant energy absorber, a radiant energy emitting section 80, and a reflecting section 81, which differs from the modeling device 100 illustrated in FIG. 2.

The radiant energy emitting section 80 is means that emits radiant energy activating the radiant energy absorber. The radiant energy may be anything that activates the radiant energy absorber, and examples thereof include light, electromagnetic radiation, and the like. Examples of the radiant energy emitting section 80 include light sources, such as a halogen lamp, an LED, an LD, a flash lamp, a xenon lamp, and a light bulb. The radiant energy emitting section 80 is configured to be capable of reciprocating in two directions (X direction and Y direction in FIG. 28) orthogonal to each other on a horizontal plane and in the vertical direction (Z direction in FIG. 28). Note that the radiant energy emitting section 80 may be disposed in the carriage 51 equipped with the head 52 and may move together with the head 52 or separately and independently of the head 52. The radiant energy emitting section 80 may be disposed on only one of the right and left sides of the head 52 in FIG. 28 or on both the right and left sides.

The reflecting section 81 is means that reflects the radiant energy emitted by the radiant energy emitting section 80. For example, the reflecting section 81 is formed to have a substantially dome-like shape opening toward the housing section 41 side (downward in FIG. 28) and having a curved surface. The radiant energy emitted by the radiant energy emitting section 80 is collected on the curved surface of the reflecting section 81, and the powder layer 31 in the housing section 41 is irradiated with the radiant energy. With this, the area of the radiant energy with which the powder layer 31 is irradiated can be made smaller than the area of the opening of the reflecting section 81.

With the powder layer 31 formed in the housing section 41, the modeling liquid applying section 5 applies the modeling liquid 10 containing the radiant energy absorber to the powder layer 31. Then, the radiant energy emitting section 80 irradiates the powder layer 31 to which the modeling liquid 10 has been applied with the radiant energy. For example, if the radiant energy absorber is near infrared dye (NIRD) or near infrared pigment (NIRP), the powder layer 31 is irradiated with electromagnetic radiation having a wavelength of approximately 800 nm to approximately 1400 nm. This allows the radiant energy absorber contained in the modeling liquid 10 to absorb the electromagnetic radiation, and the absorbed energy is converted into thermal energy, whereby the powder 20 is melted and bound. The modeling liquid 10 may contain a colorant in addition to the radiant energy absorber. Alternatively, instead of using the modeling liquid 10 containing the radiant energy absorber, the powder 20 themselves may contain a radiant energy absorbing material and may be irradiated with the radiant energy to be bound.

A modeling system including this modeling device 100 using the HSS process can also be provided that excels in drying performance (air permeability) and maintainability by having the drying device according to the present invention.

In the above-described embodiments of the present invention, the case where the drying device 200 is configured as a device separate from the modeling device 100 is exemplified; however, the modeling device 100 and the drying device 200 may be configured as an integrated device. The modeling device 100 may be configured integral with any one of the powder removing device 300 and the sintering device 400 in addition to the drying device 200 or a plurality of these.

To summarize the above-described aspects of the present invention, the present invention includes drying devices, a drying method, and a modeling system including at least the following configurations.

### First Configuration

A first configuration is a drying device including a housing section configured to house a powder bound object and a drying section configured to dry the powder bound object housed in the housing section, the housing section including an air vent in a bottom except an end.

### Second Configuration

A second configuration is a drying device in which the air vent includes the air vent in a central region of the bottom, in the first configuration.

### Third Configuration

A third configuration is a drying device in which the air vent includes an air vent between one end to the other end of the bottom, in the first or second configuration.

### Fourth Configuration

A fourth configuration is a drying device in which the powder bound object is modeled by a modeling device including a modeling section configured to form a powder layer containing the powder and a modeling liquid applying section configured to apply a modeling liquid to the powder layer to form a modeled layer, in any one of the first to third configurations.

### Fifth Configuration

A fifth configuration is a drying device in which the housing section includes an open top portion, in any one of the first to fourth configurations.

### Sixth Configuration

A sixth configuration is a drying device in which the drying section includes a pressure reducing section configured to reduce pressure in a region including the housing section and a retrieving section configured to retrieve liquid vaporized with the pressure reduced at the pressure reducing section, in any one of the first to fifth configurations.

### Seventh Configuration

A seventh configuration is a drying device in which the bottom is capable of moving up and down in a vertical direction, in any one of the first to sixth configurations.

### Eighth Configuration

An eighth configuration is a drying device in which the housing section is configured to house the powder bound object together with powder, in any one of the first to seventh configurations.

### Ninth Configuration

A ninth configuration is a drying device in which the bottom includes the air vent and a porous member and the porous member covers the air vent, in any one of the first to eighth configurations.

### Tenth Configuration

A tenth configuration is a drying device in which the bottom includes the air vent and a porous member and the porous member includes holes smaller than the air vent, in any one of the first to eighth configurations.

### Eleventh Configuration

An eleventh configuration is a drying device in which the air vent has such a size allowing the powder and gas to pass therethrough, in any one of the first to tenth configurations.

### Twelfth Configuration

A twelfth configuration is a drying device in which the holes of the porous member have a size preventing the powder from passing therethrough and allowing gas to pass therethrough, in the tenth configuration.

### Thirteenth Configuration

A thirteenth configuration is a drying device in which the porous member is placed so as to overlap a modeling region where the powder bound object is modeled, in the tenth or twelfth configuration.

### Fourteenth Configuration

A fourteenth configuration is a drying device in which the air vent includes air vents arranged in a staggered pattern, in any one of the first to thirteenth configurations.

### Fifteenth Configuration

A fifteenth configuration is a drying device in which the air vent includes a groove portion and a hole portion passing through the bottom of the housing section in an up-down direction, in any one of the first to fourteenth configurations.

### Sixteenth Configuration

A sixteenth configuration is a drying device in which the porous member includes a sheet-like member having flexibility, in any one of the tenth, twelfth, and thirteenth configurations.

### Seventeenth Configuration

A seventeenth configuration is a drying device in which a pressing member made from a material having greater density than the porous member is disposed on the porous member, in any one of the tenth, twelfth, thirteenth, and fourteenth configurations.

### Eighteenth Configuration

An eighteenth configuration is a drying device that includes a pressing member disposed on the porous member and pressing the porous member and a through hole passing through the pressing member, and in which the through hole communicates with the air vent via the holes of the porous member, in any one of the tenth, twelfth, thirteenth, and fourteenth configurations.

### Nineteenth Method

A nineteenth method is a drying method for drying a powder bound object housed in a housing section, in which the housing section includes an air vent in a bottom except an end, and the drying method includes retrieving, from the bottom, liquid vaporized from the powder bound object.

### Twentieth Configuration

A twentieth configuration is a modeling system including a modeling device configured to model a powder bound object and a drying device configured to dry the powder bound object housed in a housing section, the housing section including an air vent in a bottom except an end.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

## Claims

1. A drying device comprising:
a housing section configured to house a powder bound object; and
a drying section configured to dry the powder bound object housed in the housing section,
the housing section including an air vent in a bottom except an end.

2. The drying device according to claim 1, wherein the air vent includes an air vent in a central region of the bottom.

3. The drying device according to claim 1, wherein the air vent includes an air vent between one end to another end of the bottom.

4. The drying device according to claim 1, wherein the powder bound object is modeled by a modeling device including a modeling section and a modeling liquid applying section, the modeling section being configured to form a powder layer containing powder, the modeling liquid applying section being configured to apply modeling liquid to the powder layer to form a modeled layer.

5. The drying device according to claim 1, wherein the housing section includes an open top portion.

6. The drying device according to claim 1, wherein the drying section includes a pressure reducing section and a retrieving section, the pressure reducing section being configured to reduce pressure in a region including the housing section, the retrieving section being configured to retrieve liquid vaporized with the pressure reduced at the pressure reducing section.

7. The drying device according to claim 1, wherein the bottom is capable of moving up and down in a vertical direction.

8. The drying device according to claim 1, wherein the housing section is configured to house the powder bound object together with powder.

9. The drying device according to claim 1, wherein
the bottom includes the air vent and a porous member, and
the porous member covers the air vent.

10. The drying device according to claim 1, wherein
the bottom includes the air vent and a porous member, and
the porous member includes holes smaller than the air vent.

11. The drying device according to claim 1, wherein the air vent has a size allowing powder and gas to pass through.

12. The drying device according to claim 10, wherein the holes of the porous member have a size preventing the powder from pass through and allowing gas to pass through.

13. The drying device according to claim 10, wherein the porous member is placed so as to overlap a modeling region, the powder bound object being modeled in the modeling region.

14. A drying method for drying a powder bound object housed in a housing section, the housing section including an air vent in a bottom except an end, the drying method comprising:
retrieving, from the bottom, liquid vaporized from the powder bound object.

15. A modeling system comprising:
a modeling device configured to model a powder bound object; and
a drying device configured to dry the powder bound object housed in a housing section,
the housing section including an air vent in a bottom except an end.
